# EUROPEAN PATENT APPLICATION

(11) **EP 3 550 039 A1**
(43) Date of publication of application: **09.10.2019**
(21) Application number: 18166009.3
(22) Date of filing: 06.04.2018
(51) Int. Cl.: C22B 7/00, C22B 3/00

(54) **PROCESS FOR THE RECOVERY OF TRANSITION METALS**

(71) Applicant: BASF SE, 67056 Ludwigshafen am Rhein (DE)
(72) Inventor: Zeilinger, Michael Dr., 67056 Ludwigshafen (DE); Beierling, Thorsten, 67056 Ludwigshafen (DE); Rauls, Matthias Dr., 67056 Ludwigshafen (DE); Weiguny, Sabine Dr., 67056 Ludwigshafen (DE); Pichlmair, Stefan, Iselin, NJ 08830 (US)
(74) Representative: BASF IP Association

(57) **Abstract**

Process for the recovery of transition metals from lithium-free mixed oxides, hydroxides or oxyhydroxides containing nickel and manganese, comprising the subsequent steps of (a) slurrying at least one of said mixed oxides, hydroxides or oxyhydroxides in water, (b) treating said slurry with sulfuric acid at a pH value below 2.5, and (c) reacting the resultant mixture with a peroxide.

## Description

The present invention is directed towards a process for the recovery of transition metals from lithium-free mixed oxides, hydroxides or oxyhydroxides containing nickel and manganese, comprising the subsequent steps of
(a) slurrying at least one of said mixed oxides, hydroxides or oxyhydroxides in water,
(b) treating said slurry with sulfuric acid at a pH value below 2.5, and
(c) reacting the resultant mixture with a peroxide.

Storing electrical energy is a subject of growing interest. Efficient storage of electric energy would allow electric energy to be generated when it is advantageous and used when and where needed. Secondary electrochemical cells are well suited for this purpose due to their rechargeability. Secondary lithium batteries are of special interest for energy storage since they provide high energy density due to the small atomic weight and the large ionization energy of lithium, and they have become widely used as a power source for many portable electronics such as cellular phones, laptop computers, mini-cameras, etc. but also for electric vehicles. Especially the growing demand for raw materials such as cobalt and nickel will cause challenges in future time.

Next to mining activities, additional sources of transition metals are looked for. One additional source of transition metals is the recycling of spent batteries. Less attention has been paid to the recycling of off-spec materials. By the recycling of off-spec materials, at least a waste of resources can be avoided. In CN 103 526 028 A, a process is disclosed wherein certain precursor materials are treated with a reducing agent or an oxidizing agent and then dissolved in a strong acid. In many cases, though, such a process is hard to control. Additionally, it is observed that a considerable amount of reducing agent is lost.

It was therefore an objective of the present invention to provide a highly efficient process for the recovery of transition metals that is easy to perform and easy to control and that yields transition metal compounds that are easily transferable to an electrode active material.

Accordingly, the process defined at the outset has been found, hereinafter also referred to as inventive process or process according to the (present) invention.

In the inventive process, transition metals are recovered from lithium-free mixed oxides, hydroxides or oxyhydroxides containing nickel and manganese, preferably together with at least one of cobalt or aluminum. Said materials will hereinafter also be referred to as "starting materials".

The term lithium-free in the context of the present invention shall mean that the lithium content of starting material is below 2 % by weight of the respective material to be subjected to the inventive process, for example 0.01 to 2.0 % by weight, more preferably 0.01 to 1%. The lithium content may be determined, for example, by inductively couple plasma analytics, for example inductively coupled plasma - emission spectroscopy ("ICP-OES").

The starting material may be material that does not meet the specification due to any circumstance, for example too high impurity content, wrong composition with respect to the desired transition metals including dopants, if applicable, or wrong particle size, for example to many fines or lumps.

The starting materials may be from one production run or a combination of different production runs for the same or different materials.

In the context of the present invention, the terms hydroxides, oxides and oxyhydroxides are not limited to strictly stoichiometric but generally encompass materials that may be characterized as oxides with a residual moisture content or as oxides with the addition "·aq".

Undesired impurities may be, for example, halides, iron, chromium, or anions of non-volatile acids.

In one embodiment of the present invention, starting material contains in the range of from 30 to 98 % by weight of nickel, referring to the total metal content of said starting material, preferred are 60 to 95 % by weight.

In one embodiment of the present invention, starting material contains in the range of from 2 to 70 % by weight of manganese, referring to the total metal content of said starting material, preferred are 5 to 25 % by weight.

In a preferred embodiment, at least a part of the manganese in the starting material is in an oxidation state of +III or +IV. The oxidation state of the manganese has the strongest influence on the average state of the transition metals in the starting material. The average oxidation state of the transition metals in starting material may be in the range of from 2.05 to 3.0, preferably 2.1 to 2.8. The average oxidation state may be determined by HCI oxidation.

In one embodiment of the present invention, the starting material contains cobalt, for example 0.3 to 35 % by weight, preferably 1 to 21 % by weight, referring to the total metal content of said starting material.

In one embodiment of the present invention, the starting material contains aluminum, for example 0.01 to 10 % by weight, preferably 0.2 to 5 % by weight, referring to the total metal content of said starting material, more preferred are 0.25 to 1.5% by weight.

In one embodiment of the present invention, the starting material contains minor amounts of metals other than nickel, manganese, cobalt and aluminum. Examples are Ba, Mg, Mo, W, Ti, and Zr, and combinations of at least two of the foregoing. The total amount of such metals other than nickel, manganese, cobalt and aluminum is in the range of from 0.05 to 2 % by weight, referring to the total metal content of said starting material, preferred are 0.1 to 1.0% by weight.

Starting material may contain traces of ubiquitous metals such as sodium, calcium, iron or zinc, as impurities but such traces will not be taken into account in the description of the present invention. Traces in this context will mean amounts of 0.05 mol-% or less, referring to the total metal content of the starting material.

The starting material is usually free from conductive carbon, that means that the conductive carbon content of starting material is less than 1% by weight, referring to said starting material, preferably 0.001 to 1.0 % by weight.

Starting material may have an average particle diameter (D50) in the range of from 2 to 25 µm, preferably 4 to 20 µm, determined by sieving methods.

The inventive process comprises the subsequent steps of
(a) slurrying starting material in water, hereinafter also referred to as step (a),
(b) treating said slurry with sulfuric acid at a pH value below 2.5, hereinafter also referred to as step (b), and
(c) reacting the resultant mixture with a peroxide, hereinafter referred to as step (c).

In step (a), starting material is slurried in water. Step (a) may be performed by contacting water with starting material in a vessel. Said contacting may be supported by mixing operations, for example shaking or stirring.

It is preferred that the water hardness and in particular the water used for step (a) is at least partially removed, especially calcium. The use of desalinized water is preferred.

In one embodiment of the present invention, step (a) is performed at a temperature in the range of from 5 to 50°C, preferred are 10 to 25°C.

In one embodiment of step (a), a slurry is formed that has a solids content in the range of from 1 to 65% by weight, preferred are 10 to 35% by weight.

In one embodiment of the present invention, the slurry obtained from step (a) has a pH value in the range of from 7 to 12, preferred are 7 to 8, determined in the liquid phase at 20°C.

Following step (a), step (b) is performed. Step (b) includes treating said slurry with sulfuric acid at a pH value below 2.5, for example from below zero to 2.5, or zero to 2.0. Step (b) is effected by adding sulfuric acid to the slurry obtained in step (a).

In a preferred embodiment of the present invention, 1 to 1.5 equivalents of sulfuric acid are employed, referring to the moles of sulfate versus the moles of metals. Preferred is a ratio of 1 to 1.1. Even more preferred is a stoichiometric addition of sulfuric acid, referring to the metals.

It is preferred that the sulfuric acid has a concentration in the range of from 30 % by weight up to concentrated sulfuric acid, for example 96% by weight or 100% By weight. Although a higher dilution is possible such higher dilution would require higher volumes of the reaction vessel and thus a reduced space velocity.

In one embodiment of the present invention, the sulfuric acid is added at a temperature in the range of from 5 to 100°C, preferred are 15 to 70°C. It is observed that the temperature rises upon addition of the sulfuric acid.

In one embodiment of the present invention the reaction mixture is cooled during step (b), for example to a maximum temperature of 45°C.

After addition of the sulfuric acid, the pH value has dropped to a value of less than 2.5. It is observed that the starting material begins to dissolve at least partially.

After step (b), step (c) is performed. Step (c) includes reacting the resultant mixture with a peroxide.

Although it is possible to use an organic peroxide in step (c), for example tert.-butyl peroxide, for economic purposes it is preferred to add an inorganic peroxide, for example a persulfate such as sodium peroxodisulfate. Preferred peroxide is hydrogen peroxide, H₂O₂, for example as aqueous solution.

Step (c) may be performed, for example, by adding an aqueous solution of peroxide, in particular an aqueous solution of H₂O₂, to the mixture obtained in step (b), in one or more steps, and then to allow the resultant mixture to react, for example over a period of time from 10 to 180 minutes.

In one embodiment of the present invention, step (c) is performed at a temperature in the range of from 30 to 100°C, preferably 40 to 80°C. A temperature drop to below 30°C is to be avoided for safety reasons.

The amount of peroxide is preferably adjusted to the average oxidation sate of the transition metals, for example from 2.05 to 3.0.

In one embodiment of the present invention, the reaction mixture is stirred during step (c).

After step (c), preferably a clear solution is obtained.

Steps (a) to (c) may be carried out under air but an inert gas atmosphere is preferred, for example Ar or even more preferred N₂.

In one embodiment of the present invention the inventive process comprises an additional step (d) of
(d) adjusting the pH value to 3.5 to 6 and removing precipitates.

Adjustment of the pH value may be performed by the addition of a base, for example ammonia or alkali metal hydroxide, for example potassium hydroxide or sodium hydroxide or a combination of least two of the foregoing, for example a combination of ammonia and potassium hydroxide or sodium hydroxide.

The removal of precipitates may be performed by filtration. Such precipitates may include aluminum hydroxide or titania or BaSO₄.

In one embodiment of the present invention the inventive process comprises an additional step (e) of
(e) decomposing non-reacted peroxide.

The decomposition of the non-reacted peroxide may be performed by stirring at 80 to 100°C for 10 minutes to 2 hours or until no more peroxide may be detected with I₂ in glacial acetic acid.

By performing the inventive process, a clear solution of transition metal salts is obtained, preferably of sulfates. Said solution is usually void of elements detrimental for lithium ion batteries. The transition metals, especially manganese and nickel, may be selectively recovered and reused for making a precursor, or said solution may be added to a solution of transition metal salts for adjusting the ratio of transition metals before co-precipitation.

The invention is further illustrated by a working example.

As starting material (SM.1), a co-precipitated air-dried mixed oxyhydroxide of Ni and Co and Mn was used, molar ratio 3:1:1, average particle diameter (D50) of 12 µm. The average oxidation state of the transition metals was 2.55.

As starting material (SM.2), a freshly co-precipitated barely oxidized mixed hydroxide of Ni and Co and Mn (contains residues of water) was used (exposure of the material to air was minimized), average particle diameter (D50) of 12 µm. The average oxidation state of the transition metals was 2.06.

The average oxidation state was determined by reacting a sample of starting material with HCI. The Cl₂ gas so formed was transferred into a potassium iodide solution. I₂ was formed and titrated at acidic pH value with Na₂S₂O₃ using a Pt electrode.

### Example 1:

Step (a.1): A 2.5-liter glass reactor with a glass cross-arm stirrer, glass baffles, and dosing glass tubes was charged with 400 g of (SM.1) under an atmosphere of Ar. 1,541 g of de-ionized water were added and the stirrer was set to 250 rpm.

Step (b.1): To the slurry obtained in step (a.1), 444 g of concentrated H₂SO₄ (96% by weight) were added within 20 minutes under cooling. The pH value of the slurry dropped to about zero, and the temperature raised to 55°C. Under stirring, the slurry was allowed to cool down to 35°C. It was estimated that about 40% of the solid had dissolved.

Step (c.1): To the slurry resulting from step (b.1), 106 g of an aqueous 49% by weight H₂O₂ solution was added within 55 minutes under stirring. The temperature was above 30°C during the addition of H₂O₂. During step (c.1), the pH value was below 2.0.

Step (e.1): After completion of the addition of H₂O₂ the resultant mixture was stirred at 80°C for another 140 minutes and then allowed to cool down to ambient temperature.

After filtration, a clear solution was obtained. The transition metal recovery was about 99%.

### Example 2:

Step (a.2): A 2.5-liter glass reactor with a glass cross-arm stirrer, glass baffles, and dosing glass tubes was charged with 400 g of (SM.1) under an atmosphere of Ar. 1,487 g of de-ionized water were added and the stirrer was set to 250 rpm.

Step (b.2): To the slurry obtained in step (a.2), 450 g of concentrated H₂SO₄ (96% by weight) were added within 20 minutes under cooling. The pH value of the slurry dropped to about zero, and the temperature raised to 54°C. Under stirring, the slurry was allowed to cool down to 37°C. It was estimated that about 40% of the solid had dissolved.

Step (c.2): To the slurry resulting from step (b.2), 175 g of an aqueous 30% by weight H₂O₂ solution was added within 60 minutes under stirring. The temperature was above 30°C during the addition of H₂O₂. During step (c.2), the pH value was below 2.0.

Step (e.2): After completion of the addition of H₂O₂ the resultant mixture was stirred at 60°C for another hour and then allowed to cool down to ambient temperature.

After filtration, a clear solution was obtained. The transition metal recovery was about 99%.

### Example 3:

Step (a.3): A 2.5-I-glass reactor with a glass cross-arm stirrer, glass baffles, and dosing glass tubes was charged with 400 g (14% H₂O-content) of (SM.2) under an atmosphere of Ar. An amount of 1,1369 g of de-ionized water were added and the stirrer was set to 250 rpm.

Step (b.3): To the slurry obtained in step (a.3), 366 g of H₂SO₄ (96% by weight) were added during 15 minutes. The pH value of the slurry dropped to about 1.5, and the temperature raised to 69°C. Under stirring, the slurry was allowed to cool down to 42°C.

Step (c.3): To the slurry resulting from step (b.3), 13 g of an aqueous 49% by weight H₂O₂ solution was added within 5 minutes under stirring. The temperature was above 30°C during the addition of H₂O₂. During step (c.3), the pH value was below 2.5.

Step (e.3): After completion of the addition of H₂O₂ the resultant mixture was stirred at 77°C for 80 minutes and then allowed to cool down to ambient temperature.

After filtration, a clear solution was obtained. The transition metal recovery was about 99%.

## Claims

1. Process for the recovery of transition metals from lithium-free mixed oxides, hydroxides or oxyhydroxides containing nickel and manganese, comprising the subsequent steps of
(a) slurrying at least one of said mixed oxides, hydroxides or oxyhydroxides in water,
(b) treating said slurry with sulfuric acid at a pH value below 2.5, and
(c) reacting the resultant mixture with a peroxide.

2. Process according to claim 1 wherein said mixed oxides, hydroxides or oxyhydroxides additionally contain cobalt.

3. Process according to claim 1 or 2 wherein said mixed oxides, hydroxides or oxyhydroxides additionally contain aluminum.

4. Process according to any of the preceding claims wherein at least a part of the Mn in the mixed oxides, hydroxides or oxyhydroxides is in an oxidation state of +III or +IV.

5. Process according to any of the preceding claims wherein the peroxide in step (c) is hydrogen peroxide.

6. Process according to any of the preceding claims wherein step (c) is performed at a temperature in the range of from 40 to 80°C.

7. Process according to any of the preceding claims comprising an additional step (d) of (d) adjusting the pH value to 3.5 to 6 and removing precipitates.

8. Process according to any of the preceding claims comprising an additional step (e) of (e) decomposing non-reacted peroxide.
